# EUROPÄISCHE PATENTSCHRIFT

(11) **EP 3 595 990 B1**
(45) Veröffentlichungstag und Bekanntmachung des Hinweises auf die Patenterteilung: **10.08.2022**
(21) Anmeldenummer: 18730733.5
(22) Anmeldetag: 08.06.2018
(51) Int. Cl.: B65G 43/08, G01P 15/08

(54) **FUNKSENSORMODUL ZUR DETEKTION VON MATERIALBEHÄLTERN**
RADIO SENSOR MODULE FOR DETECTING MATERIAL CONTAINERS
MODULE DE CAPTEUR RADIO POUR LA DÉTECTION DE CONTENANTS DE MATIÈRES

(30) Priorität: 08.06.2017 DE 202017103459 U
(43) Veröffentlichungstag der Anmeldung: 22.01.2020
(73) Patentinhaber: Steute Technologies GmbH&Co. KG, 32584 Löhne (DE)
(72) Erfinder: HEGGER, Christof, 32457 Porta Westfalica (DE); BÖWERING, Gabriel, 32549 Bad Oeynhausen (DE); BOTH, Carsten, 32429 Minden (DE)
(74) Vertreter: Kleine, Hubertus
(86) Internationale Anmeldenummer: PCT/EP2018/065149
(87) Internationale Veröffentlichungsnummer: WO 2018/224646

(56) Entgegenhaltungen:
- EP-A1- 2 930 487
- DE-A1-102010 050 035
- DE-A1-102011 119 410
- DE-U1-202007 012 926

## Beschreibung

Die Erfindung betrifft ein Funksensormodul zur Detektion von Materialbehältern in einem Lager- oder Transportsystem mit einer Übertragungseinrichtung zur drahtlosen Signalübertragung, wobei das Funksensormodul eine Halterung und eine darin schwenkbar gelagerte Wippe aufweist.

In modernen Produktionsanlagen werden ebenso wie im Bereich der Logistik Lager- oder Transportsysteme für Materialbehälter eingesetzt, bei denen ein Materialtransport bzw. ein Materialbestand möglichst automatisiert erfasst und überwacht wird. Solche Lager- oder Transportsysteme umfassen Regalanordnungen ebenso wie Transportbänder, über die Materialbehälter zugeführt oder entnommen werden, beispielsweise um Material zu versenden, weiterzuverarbeiten oder einzulagern. Im Rahmen der Anmeldung sind dabei unter einem "Materialbehälter" Kästen zur Aufnahme von Stück- oder Schüttgut ebenso zu verstehen wie Schalen, Paletten oder dergleichen.

Ein Funksensormodul zur Detektion von Materialbehältern in einem Lager- oder Transportsystem ist beispielsweise aus der Druckschrift EP 2 930 487 A1 bekannt. Bei dem dort beschriebenen Sensormodul ist ein Kraftaufnehmer vorhanden, der das Vorhandensein oder auch die Größe einer Gewichtskraft eines Materialbehälters misst und ein die gemessene Gewichtskraft repräsentierendes Signal über eine Übertragungseinrichtung an eine zentrale Steuerungseinrichtung übermittelt. Die Übermittlung der Informationen über Funk anstelle einer Anbindung über Kabel vereinfacht eine Installation oder auch Nachrüstung oder Umrüstung bei bereits bestehenden Systemen. Die Messung der Gewichtskraft ermöglicht es neben der reinen Detektion des Vorhandenseins eines Materialbehälters auch, Aussagen über den Beladungszustand des Behälters zu machen. Allerdings ist eine Anordnung des Funksensormoduls in dem Lager- oder Transportsystem, die eine Messung der Gewichtskraft ermöglicht, aufwändig und nicht bei allen Lager- und Transportsystemen umsetzbar bzw. erforderlich.

Neben der Messung der Gewichtskraft sind als Schalter ausgebildete Sensoren bekannt. Die Druckschrift DE 20 2007 012 926 U1 beschreibt eine Schalteranordnung, bei der eine in einer Halterung schwenkbar gelagerte Wippe so angeordnet ist, dass sie von einem entsprechend positionierten Materialbehälter verschwenkt wird. Die Wippe ist mechanisch mit einem Betätigungselement eines an der Halterung befestigten Schalters gekoppelt, der so bei der Schwenkbewegung der Wippe betätigt wird. Die Wippe stellt damit einen Tastkopf der Anordnung dar.

Um mit einem derartigen mechanisch betätigtem Schalter eine lange Lebensdauer mit vielen Betätigungszyklen zu erzielen, ist ein mechanisch solider Aufbau des Schalters gefordert, der ein solches Sensormodul aufwändig und auch kostspielig in der Produktion macht. Zudem kann sich die Kopplung der Wippe mit dem Schalter als Schwachstelle erweisen, die die maximale Anzahl der Betätigungszyklen limitiert. Durch die Kopplung mit dem Schalter weist die Anordnung in der Regel zudem einen festen Schaltpunkt auf, d.h. dass bei einer bestimmten Winkelstellung der Wippe relativ zu ihrer Halterung geschaltet wird. In bestimmten Einbaulagen der Halterung sind unter Umständen jedoch andere Winkelstellungen für die Schaltpunkte benötigt, die sich bei dem bekannten System nur durch individuelle Anpassungen der Halterung oder der mechanischen Kopplung zwischen Wippe und Schalter erzielen lassen.

Die Druckschrift DE 10 2011 119 410 A1 zeigt ebenfalls eine Wippe, die das Vorhandensein eines Transportguts, konkret einem Bügel auf einem Schleppförderer, abtastet. Ein Verschwenken der Wippe wird über einen relativ zum Schleppförderer festliegenden Näherungssensor erfasst. Durch die Verwendung eines Näherungssensors kann die Lebensdauer gegenüber einem mechanischen Schalter erhöht werden. Die Einbaulage des Näherungssensors gegenüber der Wippe definiert jedoch auch dabei den Schaltpunkt, der nur durch individuelle Anpassung der Position des Näherungssensors variiert werden kann.

Die Druckschrift DE 10 2010 050 035 A1 betrifft eine Transportstrecke für einen ungeordneten Strom einer Vielzahl von separaten Artikeln, der durch Leitelemente, beispielsweise Stäbe, Klappen oder Platten geführt ist. Die Leitelemente sind verschwenkbar federnd gelagert, wobei ein Ausschwenken der Leitelemente auf nicht näher erläuterte Art sensorisch erfasst wird, um eine Transportgeschwindigkeit auf der Transportstrecke zu regeln.

Alternativ sind Sensormodule bekannt, die Materialbehälter unmittelbar berührungslos detektieren, beispielsweise induktiv oder optisch. Eine induktive Detektion setzt metallische Materialbehälter voraus. Eine optische Detektion ist empfindlich gegenüber Fremdlicht. Durch Verwendung von moduliertem Licht kann die Fremdlichtempfindlichkeit verringert werden, dieses ist jedoch aufwändig. Zudem sind optisch arbeitende System verschmutzungsanfällig.

Es ist eine Aufgabe der vorliegenden Erfindung, ein mechanisch einfaches und kostengünstig aufbaubares Funksensormodul der eingangs genannten Art zu schaffen, das zuverlässig und störungssicher arbeitet und das möglichst einfach und ohne eine aufwändige Einstellung des Schaltpunkts in der Lage ist, Materialbehälter zu detektieren.

Diese Aufgabe wird durch ein Funksensormodul mit den Merkmalen des unabhängigen Anspruchs gelöst. Vorteilhafte Ausgestaltungen und Weiterbildungen sind Gegenstand der abhängigen Ansprüche.

Ein erfindungsgemäßes Funksensormodul der eingangs genannten Art zeichnet sich dadurch aus, dass ein Sensor zur Erfassung einer Lage der Wippe und die Übertragungseinrichtung in der Wippe angeordnet sind.

Es sind auf diese Weise alle mechanischen, elektromechanischen, elektrischen und/oder elektronischen Komponenten, die zur Detektion einer Bewegung der Wippe und der Weiterleitung der Information über die Bewegung der Wippe dienen, in oder an der Wippe selbst angeordnet. Auf diese Weise wird ein sehr einfaches System geschaffen, bei dem - abgesehen von der Lagerung der Wippe in der Halterung - keine mechanische Wirkverbindung zwischen der Wippe und der Halterung notwendig ist.

In einer vorteilhaften Ausgestaltung des Funksensormoduls ist der Sensor ein Beschleunigungssensor, insbesondere ein MEMS (mikro-elektromechanisches System) -Sensor. Mit Hilfe des Beschleunigungssensors kann eine Lage und/oder Lageänderung der Wippe ohne jegliche mechanische Kopplung der Wippe mit der Umgebung detektiert werden. In der Ausgestaltung als MEMS-Sensor ist der Beschleunigungssensor platzsparend und auch kostengünstig erhältlich. Derartige MEMS-Beschleunigungssensoren sind vielfältig in Mobilgeräten wie Smartphones oder Tablet-Computern verbaut und aufgrund der großen Stückzahl dieser Geräte kostengünstig.

Dabei ist die Übertragungseinrichtung des Funksensormoduls bevorzugt dazu eingerichtet, von dem Beschleunigungssensor gemessene Beschleunigungswerte zumindest einer Raumrichtung zu übertragen Eine Auswertung der Messwerte des Beschleunigungssensors erfolgt dann beispielsweise im Bereich des Empfängers der übertragenen Signale und damit an einer zentralen Stelle. Dieses ist insbesondere dann vorteilhaft, wenn eine Vielzahl von Funksensormodulen mit einer zentralen Auswerteeinheit gekoppelt ist. Die Vielzahl der Funksensoren benötigt dann keine eigene Auswertelogik, was ihren Aufbau und ihre Herstellungskosten verringert.

Alternativ oder zusätzlich kann in der Wippe eine Auswerteeinheit angeordnet sein, die zur Auswertung der von dem Beschleunigungssensor gemessenen Beschleunigungswerte eingerichtet ist. Auf diese Weise kann das Funksensormodul unmittelbar eine Schaltstellung der Wippe übertragen, wodurch Kompatibilität zu bestehenden Systemen gegeben ist. Die Auswerteeinheit ist zu diesem Zweck beispielsweise mit der Übertragungseinheit verbunden ist und übergibt Informationen über eine Lage und/oder eine Lageänderung der Wippe an die Übertragungseinrichtung.

In einer weiteren vorteilhaften Ausgestaltung des Funksensormoduls weist die Wippe eine Gewichtsverteilung auf, durch die sie schwerkraftbedingt eine Ruhelage innerhalb der Halterung einnimmt. Auf diese Weise kann auf eine Rückstellfeder zwischen der Halterung und der Wippe verzichtet werden, was den Aufbau weiter vereinfacht und die Betriebszuverlässigkeit erhöht.

Die genannte Gewichtsverteilung kann beispielsweise dadurch erzielt werden, dass die Wippe einen Batteriehalter umfasst, der entsprechend innerhalb der Wippe positioniert ist.

Um das Passieren oder das Vorhandensein eines Materialbehälters sicher abtasten zu können, weist die Wippe bevorzugt einen Abschnitt mit einer gekrümmten Abtastfläche auf, wobei dieser Abschnitt zumindest teilweise über die Halterung hervorsteht und so in Kontakt mit dem Materialbehälter gelangt.

Alternativ zur Ausgestaltung mit dem Beschleunigungssensor kann an oder in der Wippe ein mechanischer Schalter als Sensor zur Erfassung der Lage vorgesehen sein, der je nach Winkelstellung der Wippe durch Anschlagen an ein Element der Halterung betätigt wird. Weiter ist es möglich, innerhalb der Wippe einen Reed-Kontakt als Sensor anzuordnen, der berührungslos mit einem an der Halterung angeordneten Magneten zusammen wirkt.

Die Erfindung wird nachfolgend anhand von Ausführungsbeispielen mit Hilfe von Figuren näher erläutert. Die Figuren zeigen:
- Fig. 1: eine isometrische Ansicht eines Funksensormoduls;
- Fig. 2a-c: verschiedene Ansichten des Funksensormoduls bemäß Fig. 1, angeordnet an einer Rollenbahn;
- Fig. 3: das Funksensormodul der Fig. 1 in einer isometrischen geschnittenen Ansicht;
- Fig. 4: eine geöffnet dargestellte Wippe des Funksensormoduls gemäß Fig. 1 in einer isometrischen Darstellung; und
- Fig. 5: das Funksensormodul gemäß Fig. 1 mit separat dargestellter Wippe bzw. Halterung.

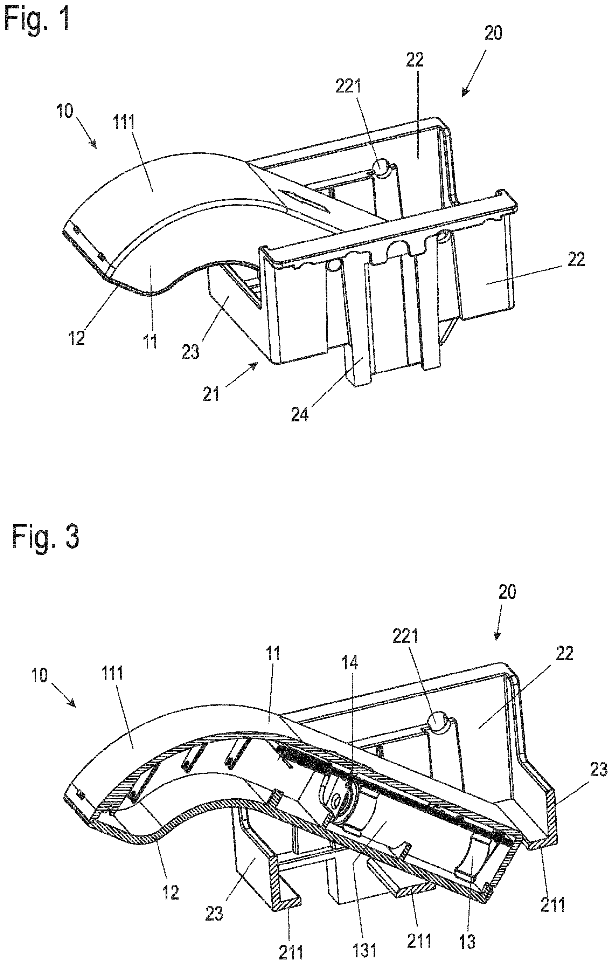

Fig. 1 zeigt in einer isometrischen Darstellung ein Ausführungsbeispiel eines Funksensormoduls, das eine Wippe 10 aufweist, die schwenkbar in einer Halterung 20 gelagert ist.

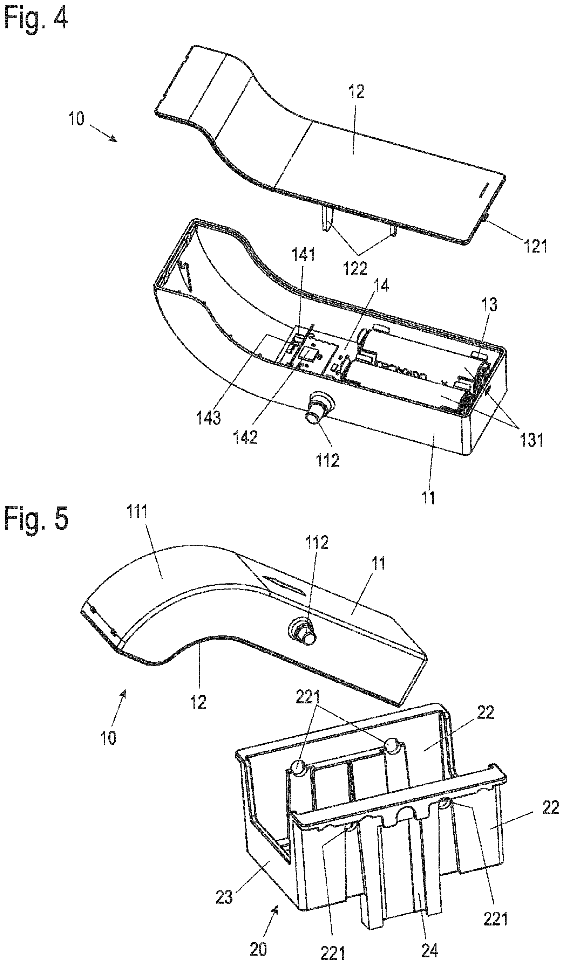

Die Wippe 10 umfasst ein Gehäuse 11, das an einer Unterseite von einem Deckel 12 verschlossen ist. Der innere Aufbau der Wippe 10 wird in Zusammenhang mit den Fig. 3 und 4 näher erläutert.

Die Wippe 10 weist einen quaderförmigen Abschnitt auf, der sich im Bereich der Halterung 20 befindet. Nach oben und zu einer Seite aus der Halterung 20 heraus ragt ein gekrümmter Abschnitt der Wippe 10 hervor, der in etwa die Form eines Segments eines Zylinderrings mit rechteckigem Querschnitt hat. An der Oberseite ist die Wippe 10 entsprechend durch einen konvex verlaufenden Abschnitt des Gehäuses 11 begrenzt, der eine Abtastfläche 111 für einen Materialbehälter bildet.

Die Wippe 10 ist schwenkbar um eine horizontale Schwenkachse in der Halterung 20 gelagert. Die Halterung 20 ist u-förmig aufgebaut, mit einer horizontal angeordneten Basis 21 sowie zwei Seitenschenkeln 22. In beiden Seitenschenkeln 22 sind gegenüberliegend Lagerstellen 221 ausgebildet, in denen die Wippe 10 mit hier nicht sichtbaren Lagerzapfen schwenkbar gelagert ist. Bei der dargestellten Halterung 20 sind zwei Paare von gegenüber liegenden Lagerstellen 221 vorgesehen. In Längsrichtung der Halterung 20, die horizontal und senkrecht zur Schwenkachse verläuft, sind die beiden Paare der Lagerstellen 221 außermittig in einem linken und rechten Bereich der Halterung 20 angeordnet. Die gezeigten Paare der Lagerstellen 221 können alternativ eingesetzt werden, je nachdem in welche Richtung die Wippe 10 in die Lagerung 20 eingesetzt wird. Beim dargestellten Beispiel der Fig. 1 ist die Wippe 10 in das in der Figur linke Paar der Lagerstellen 221 eingesetzt und ragt mit der Abtastfläche 111 nach links über die Halterung 20 hinaus.

Neben der Basis 21 sind Seitenteile 23 bei der Halterung 20 vorgesehen, die die beiden Seitenschenkel 22 miteinander verbinden und der Halterung 20 Stabilität geben. Die Seitenteile 23 stellen darüber hinaus einen Anschlag für die Wippe 10 dar. Die Halterung 20 weist Befestigungsmittel 24 auf, um innerhalb des Lager- oder Transportsystems montiert werden zu können.

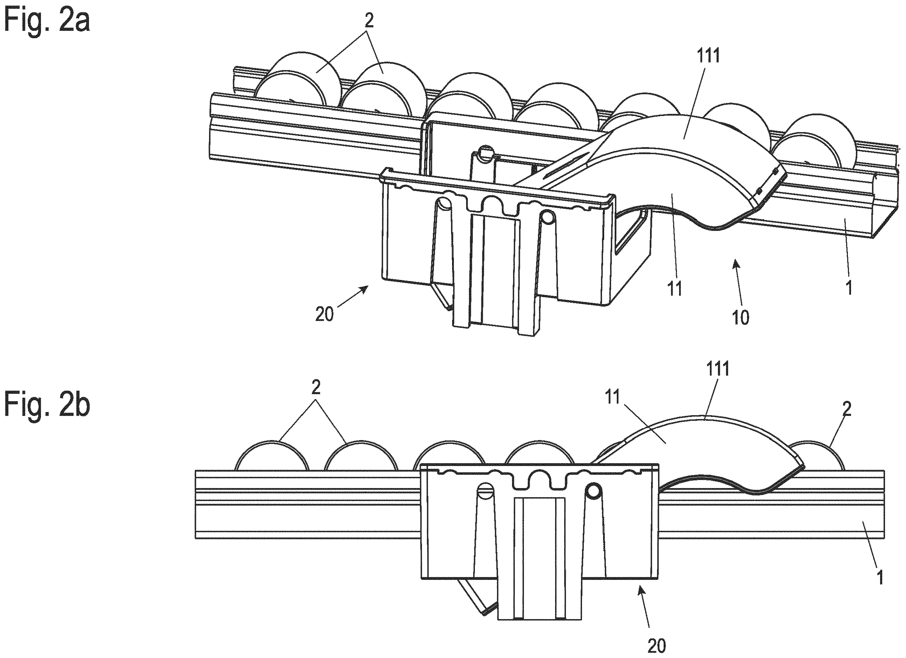

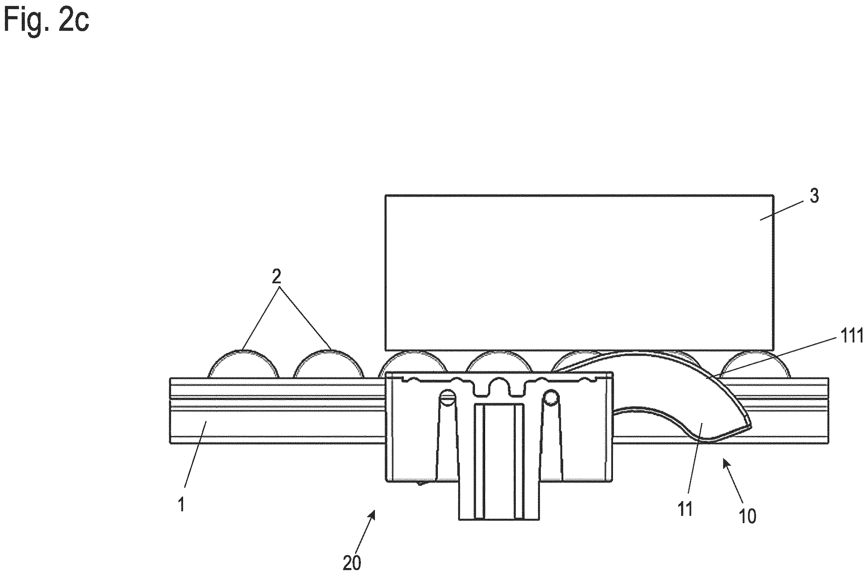

Ein Anwendungsgebiet des in Fig. 1 Funksensormoduls ist in Fig. 2a in einer isometrischen Darstellung und in den Fig. 2b und 2c in jeweils einer Seitenansicht dargestellt.

Das Funksensormodul ist bei diesem Anwendungsbeispiel im Bereich einer Rollenbahn 1 angeordnet, wobei die Rollenbahn 1 eine Mehrzahl von hintereinander angeordneten Rollen 2 aufweist, auf die Materialbehälter 3, beispielsweise Materialkästen, aufgesetzt sein können (vgl. Fig. 2c). In der Regel sind mindestens zwei derartige Rollenbahnen 1 parallel zueinander angeordnet, wobei das Funksensormodul dann bevorzugt zwischen den Rollenbahnen 1 montiert ist. Ein Transport der Materialbehälter kann auch auf nur einer Rollenbahn 1 erfolgen, wobei in dem Fall in der Regel breitere Rollen, dann auch Walzen genannt, eingesetzt werden. Eine Seitenführung für die sich entlang der Rollenbahn 1 bewegenden Materialbehälter 3 kann durch einen Führungssteg am Materialbehälter 3 gegeben sein, der an den Rändern der nach oben aus der Rollenbahn 1 hervorstehenden Rollen 2 geführt wird. Alternativ kann eine Führung durch zusätzliche seitliche Führungselemente erfolgen, die in den Fig. 2a-c nicht dargestellt sind. Es wird angemerkt, dass die in den Fig. 2a-c gezeigte Anordnung in ganz ähnlicher Weise auch mit Gleitschienen statt Rollenbahnen zur Führung der Materialbehälter umsetzbar ist.

Das Funksensormodul ist so im Bereich der Rollenbahn 1 angeordnet, dass ein auf der Rollenbahn 1 rollender Materialbehälter über die Halterung 20 hinweg rollt. Wie insbesondere die Fig. 2b zeigt, ragt die Wippe 10 mit der Abtastfläche 111 über die Höhe der Rollen 2 hinaus. Wie Fig. 2c zeigt, drückt der auf die Rollen 2 aufgesetzte Materialbehälter 3 die Wippe 10 an ihrer Abtastfläche 111 nach unten und verschwenkt sie somit im Uhrzeigerinn (bei Blick auf die Anordnung gemäß Fig. 2c).

Hat der Materialbehälter 3 das Sensormodul passiert oder wurde von der Rollenbahn 1 entnommen, richtet sich die Wippe 10 wieder wieder in die in Fig. 2b dargestellte Stellung auf. Die aufgerichtete Stellung gemäß Fig. 2b wird nachfolgend auch als "Ruhelage" bezeichnet. Das Aufrichten in die Ruhelage erfolgt bevorzugt schwerkraftbedingt, was dadurch erreicht wird, dass ein Massenschwerpunkt der Wippe 10 nicht im Bereich der Abtastfläche 111 liegt, sondern in dem von der Abtastfläche 111 aus gesehen jenseits der Lagerzapfen liegender Teil der Wippe 10. Die in Fig. 2c dargestellte, aus der Ruhelage verschwenkte Stellung der Wippe 10 wird nachfolgend auch als "Schaltlage" der Wippe 10 bezeichnet.

Im Zusammenhang mit den Fig. 3 und 4 wird näher ausgeführt, wie die Schwenkbewegung der Wippe 10 erfasst wird, um das Passieren oder das Vorhandensein des Materialbehälters 3 zu detektieren.

Fig. 3 zeigt das Funksensormodul der Fig. 1 in einem isometrischen Schnittbild, wobei der Schnitt vertikal in einer mittelsenkrechten Ebene zwischen den beiden Seitenschenkeln 22 der Halterung 20 ausgeführt ist. Die Fig. 3 zeigt zum einen den inneren Aufbau der Wippe 10 und zum anderen die Positionierung der Wippe 10 innerhalb der Halterung 20.

Die Basis 21 der Halterung 20 ist bei dem gezeigten Beispiel durchbrochen ausgebildet. Sie weist Stege 211 auf, zwischen denen sich Öffnungen befinden, in die die Wippe 10 einschwenkt. In der Ruhelage liegt die Wippe 10 an einem der Stege 211 an.

Fig. 4 stellt die Wippe 10 in einer isometrischen Darstellung ohne die Halterung 20 da, wobei der Deckel 12 vom Gehäuse 11 abgehoben ist, um Einblick in den inneren Aufbau der Wippe 10 zu erhalten. Die Wippe 10 ist in Fig. 4 mit Blick auf die Unterseite der Wippe 10, also auf die der Abtastfläche 111 gegenüber liegende Seite, dargestellt.

In der Wippe 10 ist eine Batteriehalterung 13 angeordnet, zur Aufnahme von hier beispielhaft zwei Batterien 131. Weiter ist in dem Gehäuse 11 der Wippe 10 eine Platine 14 angeordnet, die elektronische Komponenten aufnimmt, insbesondere einen Beschleunigungssensor 141, eine Auswerteeinheit 142 und eine Übertragungseinrichtung 143 zur drahtlosen Übertragung von Signalen zu einem hier nicht dargestellten Empfänger. Die Übertragungseinrichtung 143 umfasst zumindest einen Sender, bevorzugt zudem einen Empfänger, um Signale auch bidirektional übertragen zu können bzw. um Handshake-Verfahren bei einer Übertragung von Daten (i.e. digitalen Signalen) zu ermöglichen.

Die Übertragungseinrichtung 143 nutzt bevorzugt eines der freigegebenen Frequenzbänder für die sogenannte ISM (Industrial, Scientific, Medical)-Verwendung, beispielsweise im Bereich von 433 MHz (Megahertz), 868 MHz oder 2,4 GHz (Gigahertz). Dabei kann ein standardisiertes Übertragungsprotokoll, beispielsweise gemäß dem Bluetooth oder Zigbee-Standard verwendet werden oder ein proprietäres Protokoll. Bevorzugt wird ein Protokoll eingesetzt, das mit einem niedrigen Energiebedarf einhergeht, z.B. Bluetooth-LE (Low Energy), so dass eine Versorgung des Funksensormoduls durch die Batterien 131 mit langer Standzeit, bevorzugt im Bereich von mehreren Jahren mit einem Batteriesatz, möglich ist.

In Fig. 4 ist gut erkennbar, dass der Bereich des Gehäuses 11, der sich in dieser Abbildung rechts von den Lagerzapfen 112 befindet, die Batteriehalterung 13 mit den Batterien 131 aufnimmt, wohingegen im Bereich links der Lagerzapfen 112 bis auf Teile der Platine 14 im Wesentlichen leer ist. Dieses führt zu einer Gewichtsverteilung, durch die die Wippe 10 innerhalb der Lagerung 20 in die Ruhelage verschwenkt, ohne dass hierfür Rückstellkräfte einer Feder notwendig wären. Alternativ oder zusätzlich oder in bestimmten Einbaulagen kann eine Feder vorgesehen sein, um die Wippe 10 in die Ruhelage zu bewegen.

Der Deckel 12 wird bevorzugt auf das Gehäuse 11 aufgeclipst. Zu diesem Zweck sind Rastmittel 121 an zwei oder mehr Seitenkanten des Deckels 12 ausgebildet, die in entsprechende Gegenrastelemente des Gehäuses 11 eingreifen.

An der Innenseite des Deckels 12 sind Haltestege angeordnet, die bei einem Verschließen des Gehäuses 11 mit dem Deckel 12 auf eingesetzte Batterien 131 und auf die Platine 14 drücken, um diese in Position zu halten. Zur Platzierung der Platine 14 sind mit den Haltestegen 122 vergleichbare Führungselemente in dem Gehäuse 11 ausgebildet. Die Kombination dieser Führungselemente und der Haltestege 122 fixiert die Platine 14 und damit auch den Batteriehalter 13 derart, dass die Platine 14 lediglich in das Gehäuse 11 eingelegt werden braucht. Auf diese Weise kann eine defekte Platine 14 leicht ausgetauscht werden.

Anmeldungsgemäß sind alle mechanischen, elektromechanischen, elektrischen und/oder elektronischen Komponenten, die zur Detektion einer Bewegung der Wippe 10 und der Weiterleitung der Information über die Bewegung der Wippe 10 dienen, in oder an der Wippe 10 selbst angeordnet. Auf diese Weise wird ein sehr einfaches System geschaffen, bei dem - abgesehen von der Lagerung der Wippe 10 in der Halterung 20 - keine mechanische Wirkverbindung zwischen der Wippe 10 und der Halterung 20 notwendig ist.

Bei einer Installation oder Wartung des Funksensormoduls kann auf einfache Weise die Halterung 20 mit Hilfe der Befestigungsmittel 24 an der gewünschten Stelle befestigt werden und die Wippe 10 eingesetzt oder ausgetauscht werden. Durch ein Austauschen der Wippe 10 sind alle aktiven Komponenten tauscht, so dass die Funktionsfähigkeit des Funksensormoduls unmittelbar wiederhergestellt ist. Das System ist entsprechend servicefreundlich.

Bei dem dargestellten Ausführungsbeispiel erfolgt eine Lage- bzw. Winkelerkennung der Wippe 10 mithilfe des genannten Beschleunigungssensors 141. Der Beschleunigungssensor 141 kann beispielsweise als ein mikro-elektromechanisches System (MEMS) ausgebildet sein. In dieser Ausgestaltung ist der Beschleunigungssensor 141 platzsparend und auch kostengünstig erhältlich. Derartige MEMS-Beschleunigungssensoren sind vielfältig in Mobilgeräten wie Smartphones oder Tablet-Computern verbaut und aufgrund der großen Stückzahl dieser Geräte kostengünstig.

Signale des Beschleunigungssensors 141 werden ggf. nach einer Vorverarbeitung von der Auswerteeinheit 142 ausgewertet. Eine Vorverarbeitung kann eine Filterung und/oder Vorverstärkung beinhalten. Die Auswerteeinheit 142 umfasst bevorzugt einen Mikrocontroller.

Um eine Schwenkbewegung der Wippe 10 zu detektieren, wäre grundsätzlich eine Auswertung der Beschleunigung des Beschleunigungssensors 141 in eine Raumrichtung ausreichend. In der Regel sind erhältliche MEMS-Beschleunigungssensoren dazu ausgelegt, Beschleunigungswerte in allen drei Raumrichtungen zu messen und auszugeben. Wie weiter unten erläutert wird, können Beschleunigungswerte in Richtungen, die nicht von einer Schwenkbewegung der Wippe 10 beeinflusst sind, unterstützend ausgewertet werden, um zusätzliche Informationen über den Betriebszustand des Funksensormoduls bereit zu stellen.

Der Beschleunigungssensor 141 ist in der Lage, auf ihn wirkende Beschleunigungen zu ermitteln, indem auf eine Probemasse wirkende Kräfte gemessen werden. Die Kräfte auf die Probemasse setzen sich zusammen aus statischen Gewichtskräften und dynamischen Beschleunigungskräften. Insbesondere wenn Kräfte in mehr als einer Raumrichtung erfasst werden, kann aus den statischen Gewichtskräften eine Winkelstellung des Beschleunigungssensors 141 relativ zum Lot (i.e. Richtung der Erdanziehungskräfte) bestimmt werden. Aus der bekannten Anordnung des Winkelsensors 141 innerhalb der Wippe 10 kann damit eine Winkelstellung der Wippe 10 bestimmt werden.

Darüber hinaus ist jede Änderung der Winkelstellung, also ein Verschwenken der Wippe 10 beim Auffahren oder Aufsetzen eines Materialbehälters bzw. ein Zurückschwenken beim Entnehmen oder Weiterfahren des Materialbehälters mit einer Beschleunigung bzw. Verzögerung verbunden. Eine Auswertung der Signale des Beschleunigungssensors 141 kann die statischen Gewichtskräfte (Winkelstellung) und/oder die Beschleunigung beim Ändern der Winkelstellung (dynamische Beschleunigungskräfte) umfassen. Beide Komponenten (statisch / dynamisch) können für sich genommen oder bevorzugt in Kombination eingesetzt werden, um das Vorhandensein eines Materialbehälters zu detektieren.

Dabei kann eine Auswertung der Signale (Messwerte) des Beschleunigungssensors 141 innerhalb der Wippe 10 erfolgen. In dem Fall wird in der Auswerteeinheit 142 ermittelt, in welcher Lage sich die Wippe 10 befindet. Die Übertragungseinrichtung 143 übermittelt diese Information, sobald ein Verschwenken von der Ruhelage der Wippe 10 in die Schaltlage oder zurück erfolgt. Es ist alternativ denkbar, dass regelmäßig ein Signal abgegeben wird, das die Lage der Wippe 10 repräsentiert. Das erstgenannte Verhalten benötigt in der Regel weniger Energie zur Übertragung, da seltener Signale übertragen werden. Das zweitgenannte Verhalten ist dagegen betriebssicherer, wenn das Eintreffen der Signale überwacht wird. Ein Ausbleiben von Signalen deutet dann auf eine Funktionsstörung des Funksensormoduls hin. Welches Übertragungsverhalten das Funksensormodul aufweist, ist bevorzugt konfigurierbar. Eine derartige Konfiguration kann beispielsweise über Einstellmöglichkeiten an der Wippe 10 selbst vorgenommen werden, beispielsweise über Miniaturschalter ("DIP-Schalter"), die auf der Platine 14 eingelötet sind. Alternativ kann eine Fernkonfiguration über die Übertragungseinrichtung 143 der Wippe 10 vorgesehen sein.

Neben der genannten Auswertung der Signale des Beschleunigungssensors 141 innerhalb der Wippe 10 und der Übermittlung eines Signals, das direkt eine Position der Wippe 10 des Funksensormoduls repräsentiert, ist es alternativ oder auch zusätzlich möglich, von dem Beschleunigungssensor 141 gemessene Beschleunigungswerte ohne weitere Auswertung über die Übertragungseinrichtung 143 bereit zu stellen. Eine Auswertung des Beschleunigungssensors 141 erfolgt dann im Bereich des Empfängers der übertragenen Signale und damit an einer zentralen Stelle. Dieses ist insbesondere dann vorteilhaft, wenn eine Vielzahl von Funksensormodulen mit einer zentralen Auswerteeinheit gekoppelt ist. Die Vielzahl der Funksensoren benötigt dann keine eigene Auswertelogik, was ihren Aufbau und ihre Herstellungskosten verringert. Zudem besteht die Möglichkeit, Auswertealgorithmen bei einer zentralen Auswertung auf einfache Weise für einen oder alle verbundene Funksensormodule anzupassen.

Sowohl bei lokaler Auswertung innerhalb der Wippe 10 als auch bei entfernter zentraler Auswertung werden bevorzugt statische als auch dynamische Beschleunigungen ausgewertet. Die dynamischen Beschleunigungswerte können z.B. zur Plausibilisierung der statischen Werte eingesetzt werden. Beispielsweise kann ein stückweises Entleeren eines sehr leichten Materialbehälters (z.B. aus Pappe) dazu führen, dass sich dieser Behälter scheinbar leicht anhebt wenn sich sein Boden aus Folge der Entlastung zurückwölbt. Wird das Vorhandensein des Materialbehälters ausschließlich anhand der Winkelstellung der Wippe 10 bemessen, könnte in dem Fall fälschlicherweise der Materialbehälter nicht mehr erkannt werden. Durch Auswertung der dynamischen Beschleunigungskräfte kann eine langsame Entleerung jedoch leicht von einem - verglichen damit - plötzlichen Entnehmen des Materialbehälters unterschieden werden.

Die vom Beschleunigungssensor 141 gemessenen dynamischen Beschleunigungswerte können zudem verwendet werden, um mögliche Fehlerfälle innerhalb des Transport- oder Logistiksystems zu ermitteln. Beispielsweise können Erschütterungen erfasst werden, die mit Schwellenwerten verglichen werden, die für das betrachtete System als Normalfall angesehen werden. Darüber hinausgehende Erschütterungen deuten auf herunterfallende Objekte oder z. B. Probleme in der Statik eines Regals hin. Weiterhin kann auch ein Abfallen der Wippe 10 oder des gesamten Funksensormoduls detektiert werden. Zur Ermittlung von Fehlerfällen können insbesondere Beschleunigungswerte in solchen Raumrichtungen ausgewertet werden, die für die Schwenkbewegung der Wippe 10 irrelevant sind.

Wie bereits erwähnt, liegt die Wippe 10 in der Ruhelage an der Halterung 20 an, im dargestellten Fall konkret am Steg 211. Die Ausrichtung der Wippe 10 in der Ruhelage gegenüber der Senkrechten (i.e. dem Lot) ist somit von der Ausrichtung der Halterung 20 abhängig. Beispielsweise kann die Halterung 20 mit ihrer Oberseite parallel zu einer schräg verlaufenden Rollenbahn montiert sein, so dass sich eine andere Stellung der Wippe in der Ruhelage ergibt als im Beispiel der Fig. 2a-c gezeigt ist.

Um eine Auslenkung der Wippe 10 gegenüber der Ruhelage möglichst unabhängig von der genauen Ausrichtung der Ruhelage sicher erkennen zu können, kann vorgesehen sein, die in der Ruhelage vom Beschleunigungssensor 141 gemessenen statischen Beschleunigungswerte einzulesen und so die Position der Wippe 10 in der Ruhelage zu kalibrieren. Es kann vorgesehen sein, über die Übertragungseinrichtung 143 ein entsprechendes Signal an das Funksensormodul zu übermitteln, dass die aktuelle Lage der Wippe 10 als Ruhelage kalibriert wird. Alternativ kann an der Wippe 10 ein Tastschalter angeordnet sein, der den Kalibrierschritt bei manueller Betätigung auslöst.

Fig. 5 zeigt das vom Sensormodul der Fig. 1 in einer isometrischen Darstellung, wobei die Wippe 10 aus der Halterung 20 entnommen ist. In dieser Figur ist gut die beiden alternativen Lagerstellen 221 in der Halterung 20 zu erkennen. Die Lagerstellen 221 sind durch Bohrungen in den Seitenschenkeln 22, in die die Lagerzapfen 112 eingesetzt sind, gebildet. Dabei sind die Lagerzapfen 112 in ihrer Länge so bemessen, dass zum Einsetzen der Wippe 10 die Seitenschenkel 22 der Halterung 20 leicht elastisch aufgeweitet werden, so dass die Wippe 10 verschwenkbar, aber ansonsten festgelegt in der Halterung 20 gelagert ist. Die Lagerzapfen 112 sind benachbart zum Gehäuse 11 verdickt ausgeführt, wodurch die Seitenposition der Wippe 10 innerhalb der Halterung 20 bestimmt wird und verhindert wird, dass die Wippe 10 an den Seitenschenkeln 22 der Halterung 20 schleift.

Bei dem zuvor beschriebenen Ausführungsbeispiel wird erfolgt die Lage- bzw. Bewegungserkennung der Wippe 10 mit Hilfe des Beschleunigungssensors 141. Alternativ kann in oder an der Wippe ein mechanischer Schalter als Sensor zur Erfassung der Lage der Wippe angeordnet sein, der je nach Winkelstellung der Wippe durch Anschlagen an ein Element der Halterung betätigt wird. Weiter ist es möglich, innerhalb der Wippe einen Reed-Kontakt als Sensor anzuordnen, der berührungslos mit einem an der Halterung angeordneten Magneten zusammen wirkt.

### Bezugszeichen

- 1: Rollenbahn
- 2: Rolle
- 3: Materialbehälter

- 10: Wippe
- 11: Gehäuse
- 111: Abtastfläche
- 112: Lagerzapfen
- 12: Deckel
- 121: Rastmittel
- 122: Haltesteg
- 13: Batteriehalterung
- 131: Batterie
- 14: Platine
- 141: Beschleunigungssensor
- 142: Auswerteeinheit
- 143: Übertragungseinrichtung

- 20: Halterung
- 21: Basis
- 211: Steg
- 212: Öffnung
- 22: Seitenschenkel
- 221: Lagerstelle
- 23: Seitenteil
- 24: Befestigungsmittel

## Patentansprüche

1. Funksensormodul zur Detektion von Materialbehältern (3) in einem Lageroder Transportsystem mit einer Ubertragungseinrichtung (143) zur drahtlosen Übertragung von Signalen, wobei das Funksensormodul eine Halterung (20) und eine darin schwenkbar gelagerte Wippe (10) aufweist, **dadurch gekennzeichnet, dass** ein Sensor zur Erfassung einer Lage der Wippe (10) und die Ubertragungseinrichtung (143) in der Wippe (10) angeordnet sind.

2. Funksensormodul nach Anspruch 1, bei dem der Sensor ein Beschleunigungssensor (141) ist.

3. Funksensormodul nach Anspruch 2, bei dem der Beschleunigungssensor (141) ein MEMS-Sensor ist.

4. Funksensormodul nach Anspruch 2 oder 3, bei dem die Übertragungseinrichtung (143) dazu eingerichtet ist, von dem Beschleunigungssensor (141) gemessene Beschleunigungswerte zumindest einer Raumrichtung zu übertragen.

5. Funksensormodul nach einem der Ansprüche 2 bis 4, bei dem in der Wippe (10) eine Auswerteeinheit (142) angeordnet ist, die zur Auswertung der von dem Beschleunigungssensor (141) gemessene Beschleunigungswerte eingerichtet ist.

6. Funksensormodul nach Anspruch 5, bei dem die Auswerteeinheit (142) mit der Übertragungseinheit (143) verbunden ist und Informationen über eine Lage und/oder eine Lageänderung der Wippe (10) an die Übertragungseinrichtung (143) übergibt.

7. Funksensormodul nach einem der Ansprüche 1 bis 6, bei dem die Wippe (10) eine Gewichtsverteilung aufweist, durch die die Wippe (10) schwerkraftbedingt eine Ruhelage innerhalb der Halterung (20) einnimmt.

8. Funksensormodul nach Anspruch 7, bei dem die Wippe (10) einen Batteriehalter (13) aufweist, der so innerhalb der Wippe (10) positioniert ist, dass eingesetzte Batterien (131) maßgeblich die Gewichtsverteilung bestimmen.

9. Funksensormodul nach einem der Ansprüche 1 bis 6, bei dem die Wippe (10) einen Abschnitt aufweist, der eine gekrümmte Abtastfläche (111) aufweist, wobei dieser Abschnitt zumindest teilweise über die Halterung (20) hervorsteht.

10. Funksensormodul nach Anspruch 1, bei dem der Sensor ein mechanischer Schalter ist, der mit einem Betätigungselement mit der Halterung (20) zusammenwirkt.

11. Funksensormodul nach Anspruch 1, bei dem der Sensor ein Reed-Kontakt ist, der mit einem an der Halterung (20) befestigten Magneten zusammenwirkt.

## Claims

1. Radio sensor module for detecting material containers (3) in a warehouse or transport system, having a transmission device (143) for a wireless transmission of signals, wherein the radio sensor module has a holder (20) and a rocker (10) mounted pivotably therein, **characterized in that** a sensor for detecting a position of the rocker (10) and the transmission device (143) are arranged in the rocker (10).

2. Radio sensor module according to claim 1, in which the sensor is an acceleration sensor (141).

3. Radio sensor module according to claim 2, in which the acceleration sensor (141) is a MEMS sensor.

4. Radio sensor module according to claim 2 or 3, in which the transmission device (143) is adapted to transmit acceleration values measured by the acceleration sensor (141) of at least one spatial direction.

5. Radio sensor module according to one of claims 2 to 4, in which an evaluation unit (142) is arranged in the rocker (10) and is set up to evaluate the acceleration values measured by the acceleration sensor (141).

6. Radio sensor module according to claim 5, in which the evaluation unit (142) is connected to the transmission device (143) and transmits information about a position and/or a change in position of the rocker (10) to the transmission device (143).

7. Radio sensor module according to one of claims 1 to 6, in which the rocker (10) has a weight distribution by means of which the rocker (10) assumes a rest position within the holder (20) due to gravity.

8. Radio sensor module according to claim 7, in which the rocker (10) comprises a battery holder (13) positioned within the rocker (10) such that inserted batteries (131) significantly determine the weight distribution.

9. Radio sensor module according to one of claims 1 to 6, in which the rocker (10) comprises a section having a curved sensing surface (111), wherein said section protrudes at least partially beyond the holder (20).

10. Radio sensor module according to claim 1, in which the sensor is a mechanical switch cooperating with an actuating element with the holder (20).

11. Radio sensor module according to claim 1, in which the sensor is a reed contact cooperating with a magnet attached to the holder (20).

## Revendications

1. Module de capteur radio pour la détection de contenants de matières (3) dans un système de stockage ou de transport, avec un dispositif de transmission (143) pour une transmission de signaux sans fil, lequel module de capteur radio présente une monture (20) et une bascule (10) disposée sur celle-ci de façon pivotante, **caractérisé en ce qu'**un capteur destiné à capter une position de la bascule (10) et le dispositif de transmission (143) sont disposés dans la bascule (10).

2. Module de capteur radio selon la revendication 1, dans lequel le capteur est un capteur d'accélération (141).

3. Module de capteur radio selon la revendication 2, dans lequel le capteur d'accélération (141) est un capteur MEMS.

4. Module de capteur radio selon la revendication 2 ou 3, dans lequel le dispositif de transmission (143) est conçu pour transmettre des valeurs d'accélération mesurées par le capteur d'accélération (141) dans au moins une direction de l'espace.

5. Module de capteur radio selon l'une des revendications 2 à 4, dans lequel est disposée dans la bascule (10) une unité d'analyse (142) conçue pour analyser les valeurs d'accélération mesurées par le capteur d'accélération (141).

6. Module de capteur radio selon la revendication 5, dans lequel l'unité d'analyse (142) est connectée à l'unité de transmission (143) et transmet des informations à l'unité de transmission (143) sur une position et/ou un changement de position de la bascule (10).

7. Module de capteur radio selon l'une des revendications 1 à 6, dans lequel la bascule (10) présente une répartition du poids telle que la bascule (10) prend une position de repos à l'intérieur de la monture (20) sous l'effet de la gravité.

8. Module de capteur radio selon la revendication 7, dans lequel la bascule (10) présente un logement de piles (13) positionné dans la bascule (10) de telle manière que les piles (131) insérées soient déterminantes pour la répartition du poids.

9. Module de capteur radio selon l'une des revendications 1 à 6, dans lequel la bascule (10) présente une partie munie d'une surface de détection incurvée (111), cette partie dépassant au moins en partie au-delà de la monture (20).

10. Module de capteur radio selon la revendication 1, dans lequel le capteur est un contacteur mécanique qui coopère avec la monture (20) avec un élément d'actionnement.

11. Module de capteur radio selon la revendication 1, dans lequel le capteur est un contact à lames qui coopère avec un aimant fixé sur la monture (20).
